# EUROPEAN PATENT SPECIFICATION

(11) **EP 3 339 691 B1**
(45) Date of publication and mention of the grant of the patent: **15.04.2020**
(21) Application number: 17207614.3
(22) Date of filing: 15.12.2017
(51) Int. Cl.: F16J 1/00, F04B 39/00

(54) **PISTON FOR HERMETICALLY SEALED COMPRESSORS**
KOLBEN EINES HERMETISCHEN KOLBENKOMPRESSORS
PISTON POUR COMPRESSEURS HERMÉTIQUES

(30) Priority: 22.12.2016 IT 201600130253
(43) Date of publication of application: 27.06.2018
(73) Proprietor: Italia Wanbao-ACC S.r.l., 32026 Mel (BL) (IT)
(72) Inventor: OREFICE, Marco, 32026 Mel BL (IT)
(74) Representative: Gonella, Mario

(56) References cited:
- EP-A1- 0 838 587
- WO-A1-02/02944
- US-A1- 2004 253 131

## Description

### TECHNICAL FIELD OF INVENTION

. The present invention relates to a piston for hermetically sealed compressors, used in particular in refrigerating appliances of domestic or professional type.

### PRIOR ART

. The piston of a hermetically sealed compressor has the task of compressing a refrigerating fluid in the scope of a refrigeration cycle, generally used in refrigerating appliances of domestic or professional type, through the reciprocating movement of the piston inside a cylinder. The tasks performed by the piston, in addition to the compression of the refrigerant, also include the essentially hermetic sealing of the chamber in the cylinder and of guiding the piston itself within the cylinder to guarantee the axial linearity of the reciprocating motion; in fact, it is necessary to avoid possible misalignments of the piston with respect to the axis of the cylinder, which could cause jammings that lead to malfunctions or breakages of the compressor.

. To perform these tasks, the piston must be provided with suitable sealing and guiding surfaces which, cooperating with the internal walls of the cylinder, must guarantee a perfect hermetic sealing and guide performance during the operation of the compressor. To achieve these requirements, there must be a minimal clearance between the surfaces of the piston and the cylinder, with the surfaces almost in mutual contact with each other.

. These requirements conflict with the need to reduce the friction that is generated when the piston slides inside the cylinder, which is a crucial condition to avoid lowering excessively the energy efficiency of the compressor.

. A partial solution of these conflicting requirements is known from US Patent 6,928,921, which describes a piston in which the external cylindrical surface includes two opposite bands or sectors extending from the sealing head of the piston toward the lower free edge; the areas included between the two bands or sectors are lowered, by grinding, both with respect to the sealing head and to the lateral bands, so as to limit the friction with the walls of the cylinder. The task of the lateral bands is to guide the reciprocating axial movement of the piston in the cylinder and to cooperate with the head of the piston to provide the necessary hermetic closure.

. One drawback found in this solution lies in the fact that the lowered areas adjacent to the through hole of the connecting pin are typically wetted with lubricating oil that accumulates in the through hole and forms a pool of oil in the hole. This could result in oil seeping into the cylinder compression chamber through the clearance existing between the piston and the cylinder; the oil that seeped through is pumped by the piston together with the refrigerant, thus reducing the energy efficiency of the compressor.

. A further drawback lies in the fact that the grinding machining of the lowered areas adjacent to the connecting pin hole generates burrs on the edges of the hole that must then be removed through further deburring machining to guarantee the perfect flatness of the surfaces in motion relative to each other and to avoid the occurrence of further friction.

### SUMMARY OF THE INVENTION

. The main objective of the present invention is to overcome the drawbacks of the prior art by devising a piston for hermetically sealed compressors capable of improving the energy efficiency of the compressor through the reduction of energy losses caused by friction between the piston and the cylinder.

. In the scope of the above objective, one purpose of the present invention is to provide a piston that is capable of guaranteeing a perfect hermetic sealing and guiding performance during the operation of the compressor so as to cut down vibrations without increasing seepages caused by friction.

.Another purpose is to provide a piston that does not require further finishing operations to eliminate burrs or other residues resulting from the production process.

.A further purpose is to reduce the seepage of lubricating fluid within the compression chamber.

.One not secondary purpose is to devise a piston for hermetically sealed compressors that achieves the above objective and purposes at competitive costs and that can be obtained with the usual known plants, machinery and equipment.

.The above objective and purposes, and others that will be more clearly evident in the description which follows, are achieved with a piston for hermetic compressors as defined in claim 1.

### BRIEF DESCRIPTION OF THE FIGURES

.Further characteristics and the advantages of the present invention will become more evident from the following description of some particular, but not exclusive, embodiments illustrated purely by way of a non-limiting example with reference to the enclosed figures, in which:
- figure 1 illustrates, in a front view, a piston for hermetically sealed compressors according to the present invention;
- figure 2 is a perspective view of the piston of figure 1.

### DETAILED DESCRIPTION OF THE INVENTION

.With reference to the previously mentioned figures, reference numeral 1 indicates in general terms a piston for a hermetically sealed compressor used generally, for example, in refrigerating devices of domestic or professional type.

.The piston 1 comprises a head provided with a circumferential sealing strip 2, suitable to accomplish the sealing function by cooperating with the walls of the cylinder, and a through hole 3 suitable to receive the pin of the connecting rod (not shown).

.The clearance between the sealing strip 2 and the walls of the cylinder must be as small as possible to guarantee the sealing capacity and at the same time to allow the lubricating fluid, generally oil, to create a sliding film to favor the reciprocating motion between the piston and the cylinder and to limit the rate of wear.

.The piston 1 also comprises a first band 4 and a second band 5 that extend axially from the sealing strip 2 in the shape of circular sectors having substantially the same diameter as the sealing strip 2. Said first and second band 4, 5 are arranged opposite to each other on an axis essentially perpendicular to the axis of the hole 3, similarly to what was already laid down in US Patent 6,928,921, and perform both sealing and guiding functions inside the cylinder.

.According to an aspect peculiar to the present invention, the piston 1 is provided with at least one further third band 6 that extends axially from the sealing strip 2 in the shape of a circular sector having substantially the same diameter as the sealing strip 2.

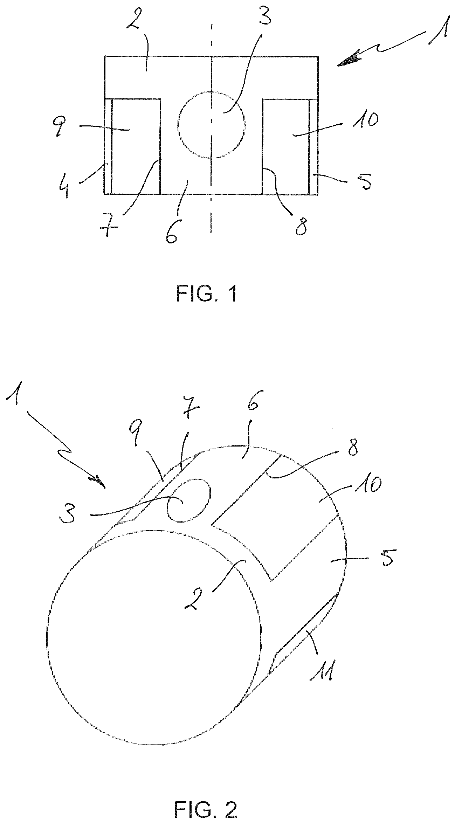

.The third band 6 is arranged in coincidence with a first end of the through hole 3 so as to include said hole 3 within it. In fact, as is evident from figures 1 and 2, the circumferential or angular extension of the circular sector defined by the third band 6 is greater than the diameter of the hole 3, so that the lateral edges 7, 8 of the third band 6 are arranged adjacent to, or at least do not intersect, the edges of the first end of the through hole 3.

.Advantageously, for a better guiding symmetry, a fourth band, not visible in the enclosed figures can be provided, arranged on the piston 1 from the opposite side with respect to the third band 6 at an axis essentially parallel to the axis of the hole 3. Similarly to what was described for the third band 6, the fourth band extends axially from the sealing strip 2 in the shape of a circular sector having substantially the same diameter as the sealing strip 2 and arranged at a second end of the hole 3 so as to include said hole 3 within it, or so that the lateral edges of the fourth band are arranged adjacent to, or at least do not intersect, the edges of the second end of the hole 3, as the circumferential, or angular, extension of the circular sector defined by the fourth band is greater than the diameter of the hole 3.

.The circular sectors 9, 10, 11 contained between the edges of the first band 4, of the second band 5, of the third band 6, of the fourth band, if any, opposite the third band 6, and the lower edge of the sealing strip 2 facing said bands, are reduced or lowered, for example by grinding, so as to have a smaller diameter than the above bands for the purpose of lowering the friction between the piston and the cylinder by the effect of the greater clearance between the respective surfaces.

.From the above it is therefore evident how the present invention achieves the initially foreseen purposes and advantages: in fact, a piston for hermetic compressors was designed with the capability of improving the energy efficiency of the compressors through the reduction of seepages due to friction between the piston and the cylinder.

.In effect, with the contact surfaces between the piston and the cylinder being equal, the presence of the lateral bands arranged in two directions that are essentially orthogonal to each other makes it possible to obtain better characteristics guiding the movement of the piston inside the cylinder. This makes it possible to reduce the total contact surface between the piston and the cylinder, with consequent reduction of seepage due to friction.

.Furthermore, the improved guiding characteristics also make it possible to reduce the vibrations generated by the relative piston-cylinder reciprocating motion and to improve the performance of the compressor.

.Another advantageous aspect of the present invention lies in the fact that the inclusion of the hole 3 of the connecting pin within the third guide band 6 reduces the clearance between the surface of the piston and the walls of the cylinder; this makes it possible to avoid, or at least limit, the leakage of lubricating fluid inside the compression chamber since this avoids the formation of the "sump pit" that is generated when there is a greater distance between the surfaces of the piston and the cylinder.

.A further advantageous aspect of including the hole 3 within the third band 6 stems from the fact that, as the band 6 is not subjected to grinding operations to reduce its surface, the hole itself 3 does not require any further finishing machining to eliminate burrs or other residues generated by the production process, with a resulting reduction of the times and costs of the same process.

.Naturally, the present invention is susceptible to many applications, modifications or variants without thereby departing from the scope of patent protection as defined in independent claim 1.

.Further, the materials and equipment used for achieving the present invention, as well as the shapes and dimensions of the individual components, can be the most suitable for the specific requirements.

## Claims

1. Piston of a hermetic compressor comprising a circumferential sealing strip (2), a first band (4) and a second band (5) axially extending from said sealing strip (2), a through hole (3) adapted to receive a connecting pin for a piston rod, said first band (4) and said second band (5) being configured as circular sectors having substantially the same diameter of said sealing strip (2) so as to perform a sealing function cooperating with said sealing strip (2) and a guiding function for guiding the movement of said piston inside a cylinder, said first band (4) and said second band (5) being arranged mutually opposed along an axis essentially perpendicular to the axis of said through hole (3), **characterized in that** said piston (1) further comprises at least a third band (6) axially extending from said sealing strip (2), said at least a third band (6) being configured as a circular sector having substantially the same diameter of said sealing strip (2) and being arranged at a first end of said through hole (3) such that the lateral edges (7, 8) of said third band (6) are arranged adjacent the edges of said through hole (3).

2. Piston as in claim 1 further comprising a fourth band arranged opposite said third band (6) along an axis essentially parallel to the axis of said through hole (3), said fourth band being configured as a circular sector having substantially the same diameter of said sealing strip (2) and being arranged at a second end of said through hole (3) opposite said first end such that the lateral edges of said fourth band are arranged adjacent the edges of said through hole (3).

3. Piston as in claim 1, wherein the angular extension of said third band (6) is higher than the diameter of said through hole (3) such that said third band (6) incorporates said first end of said through hole (3).

4. Piston as in claim 2, wherein the respective angular extensions of said third band (6) and said fourth band are higher than the diameter of said through hole (3) such that said third band (6) incorporates said first end of said through hole (3) and said fourth band incorporates said second end of said through hole (3).

5. Piston as in claim 1, wherein the circular sectors (9, 10, 11) respectively comprised between the edges of said first band (4), said second band (5), said third band (6) and the lower edge of said sealing strip (2) facing said bands (4, 5, 6) are recessed such that the diameter of said circular sectors (9, 10, 11) is lower than the diameter of said bands (4, 5, 6).

6. Piston as in claim 1, wherein the circular sectors (9, 10, 11) respectively comprised between the edges of said first band (4), said second band (5), said third band (6), said fourth band and the lower edge of said sealing strip (2) facing said bands (4, 5, 6) are recessed such that the diameter of said circular sectors (9, 10, 11) is lower than the diameter of said first, second, third and fourth bands.

7. Hermetic compressor comprising a piston as any of the preceding claims.

## Patentansprüche

1. Kolben eines hermetischen Verdichters, der ein umlaufendes Dichtungsband (2),einen ersten Streifen (4) und einen zweiten Streifen (5), die sich axial von dem Dichtungsband (2) aus erstrecken, sowie ein Durchgangsloch (3) umfasst, das zum Aufnehmen eines Verbindungsbolzens für eine Kolbenstange eingerichtet ist, wobei der erste Streifen (4) und der zweite Streifen (5) als Kreissektoren ausgeführt sind, die im Wesentlichen den gleichen Durchmesser haben wie das Dichtungsband (2) und so im Zusammenwirken mit dem Dichtungsband (2) eine Dichtungsfunktion sowie eine Führungsfunktion zum Führen der Bewegung des Kolbens im Inneren eines Zylinders erfüllen, wobei der erste Streifen (4) und der zweite Streifen (5) einander gegenüberliegend entlang einer Achse im Wesentlichen senkrecht zu der Achse des Durchgangslochs (3) angeordnet sind, **dadurch gekennzeichnet, dass** der Kolben (1) des Weiteren wenigstens einen dritten Streifen (6) umfasst, der sich axial von dem Dichtungsband (2) aus erstreckt, wobei der wenigstens eine dritte Streifen (6) als ein Kreissektor ausgeführt ist, der im Wesentlichen den gleichen Durchmesser hat wie das Dichtungsband und an einem ersten Ende des Durchgangslochs (3) so angeordnet ist, dass die Seitenkanten (7, 8) des dritten Streifens (6) an die Ränder des Durchgangslochs (3) angrenzend angeordnet sind.

2. Kolben nach Anspruch 1, der des Weiteren einen vierten Streifen umfasst, der dem dritten Streifen (6) gegenüberliegend entlang einer Achse im Wesentlichen parallel zu der Achse des Durchgangslochs (3) angeordnet ist, wobei der vierte Streifen als ein Kreissektor ausgeführt ist, der im Wesentlichen den gleichen Durchmesser hat wie das Dichtungsband (2) und an einem zweiten Ende des Durchgangslochs (3) gegenüber dem ersten Ende so angeordnet ist, dass die Seitenkanten des vierten Streifens an die Ränder des Durchgangslochs (3) angrenzend angeordnet sind.

3. Kolben nach Anspruch 1, wobei die Winkelausdehnung des dritten Streifens (6) größer ist als der Durchmesser des Durchgangslochs (3), so dass der dritte Streifen (6) das erste Ende des Durchgangslochs (3) einschließt.

4. Kolben nach Anspruch 2, wobei die jeweiligen Winkelausdehnungen des dritten Streifens (6) und des vierten Streifens größer sind als der Durchmesser des Durchgangslochs (3), so dass der dritte Streifen (6) das erste Ende des Durchgangslochs (3) einschließt und der vierte Streifen das zweite Ende des Durchgangslochs (3) einschließt.

5. Kolben nach Anspruch 1, wobei die Kreissektoren (9, 10, 11), die jeweils zwischen den Kanten des ersten Streifens (4), des zweiten Streifens (5), des dritten Streifens (6) und der den Streifen (4, 5, 6) zugewandten Unterkante des Dichtungsbandes (2) eingeschlossen sind, so ausgespart sind, dass der Durchmesser der Kreissektoren (9, 10, 11) kleiner ist als der Durchmesser der Streifen (4, 5, 6).

6. Kolben nach Anspruch 1, wobei die Kreissektoren (9, 10, 11), die jeweils zwischen den Kanten des ersten Streifens (4), des zweiten Streifens (5), des dritten Streifens (6), des vierten Streifens und der den Streifen (4, 5, 6) zugewandten Unterkante des Dichtungsbandes (2) eingeschlossen sind, so ausgespart sind, dass der Durchmesser der Kreissektoren (9, 10, 11) kleiner ist als der Durchmesser des ersten, des zweiten, des dritten und des vierten Streifens (4, 5, 6).

7. Hermetischer Verdichter, der einen Kolben nach einem der vorangehenden Ansprüche umfasst.

## Revendications

1. Piston d'un compresseur hermétique comprenant une bande d'étanchéité (2) circonférentielle, une première bande (4) et une deuxième bande (5) s'étendant axialement à partir de ladite bande d'étanchéité (2), un trou traversant (3) adapté pour recevoir une broche de connexion pour une tige de piston, ladite première bande (4) et ladite deuxième bande (5) étant configurées comme des secteurs circulaires ayant sensiblement le même diamètre que ladite bande d'étanchéité (2) de manière à remplir une fonction d'étanchéité en coopérant avec ladite bande d'étanchéité (2) et une fonction de guidage pour guider le mouvement dudit piston à l'intérieur d'un cylindre, ladite première bande (4) et ladite deuxième bande (5) étant disposées mutuellement opposées le long d'un axe essentiellement perpendiculaire à l'axe dudit trou traversant (3), **caractérisé en ce que** ledit piston (1) comprend en outre au moins une troisième bande (6) s'étendant axialement à partir de ladite bande d'étanchéité (2), ladite au moins une troisième bande (6) étant configurée comme un secteur circulaire ayant sensiblement le même diamètre que ladite bande d'étanchéité (2) et étant disposée à une première extrémité dudit trou traversant (3) de telle sorte que les bords latéraux (7, 8) de ladite troisième bande (6) sont disposés à côté des bords dudit trou traversant (3).

2. Piston selon la revendication 1, comprenant en outre une quatrième bande disposée en face de ladite troisième bande (6) le long d'un axe essentiellement parallèle à l'axe dudit trou traversant (3), ladite quatrième bande étant configurée comme un secteur circulaire ayant sensiblement le même diamètre que ladite bande d'étanchéité (2) et étant disposée à une seconde extrémité dudit trou traversant (3) opposée à ladite première extrémité de telle sorte que les bords latéraux de ladite quatrième bande sont disposés de manière adjacente aux bords dudit trou traversant (3).

3. Piston selon la revendication 1, dans lequel l'extension angulaire de ladite troisième bande (6) est supérieure au diamètre dudit trou traversant (3) de telle sorte que ladite troisième bande (6) incorpore ladite première extrémité dudit trou traversant (3).

4. Piston selon la revendication 2, dans lequel les extensions angulaires respectives de ladite troisième bande (6) et de ladite quatrième bande sont supérieures au diamètre dudit trou traversant (3) de telle sorte que ladite troisième bande (6) incorpore ladite première extrémité dudit trou traversant (3) et ladite quatrième bande incorpore ladite seconde extrémité dudit trou traversant (3).

5. Piston selon la revendication 1, dans lequel les secteurs circulaires (9, 10, 11) compris respectivement entre les bords de ladite première bande (4), ladite deuxième bande (5), ladite troisième bande (6) et le bord inférieur de ladite bande d'étanchéité (2) faisant face auxdites bandes (4, 5, 6) sont évidés de telle sorte que le diamètre desdits secteurs circulaires (9, 10, 11) est inférieur au diamètre desdites bandes (4, 5, 6).

6. Piston selon la revendication 1, dans lequel les secteurs circulaires (9, 10, 11) compris respectivement entre les bords de ladite première bande (4), ladite deuxième bande (5), ladite troisième bande (6), ladite quatrième bande le bord inférieur de ladite bande d'étanchéité (2) faisant face auxdites bandes (4, 5, 6) sont évidés de telle sorte que le diamètre desdits secteurs circulaires (9, 10, 11) est inférieur au diamètre desdites première, deuxième, troisième et quatrième bandes.

7. Compresseur hermétique comprenant un piston selon l'une quelconque des revendications précédentes.
